(19) Europäisches Patentamt
European Patent Office
Office européen des brevets

(11) **EP 1 833 191 A1**

(12) **EUROPÄISCHE PATENTANMELDUNG**

(43) Veröffentlichungstag:
**12.09.2007 Patentblatt 2007/37**

(51) Int Cl.:
*H04L 9/06* (2006.01)

(21) Anmeldenummer: **07003459.0**

(22) Anmeldetag: **20.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **10.03.2006 DE 102006011223**

(71) Anmelder: **Micronas GmbH**
**79108 Freiburg i. Br. (DE)**

(72) Erfinder:
• **Steffens, Reinhard**
**80331 München (DE)**
• **Kaluza, Sebastian**
**81541 München (DE)**

(74) Vertreter: **Patentanwälte**
**Westphal, Mussgnug & Partner**
**Mozartstrasse 8**
**80336 München (DE)**

(54) **Datenverarbeitungsverfahren mit einem Verschlüsselungsalgorithmus**

(57) Die Erfindung betrifft ein Datenverarbeitungsverfahren, das ein Ver- oder Entschlüsselungsverfahren und folgende Verfahrensschritte umfasst:
- Ver- oder Entschlüsseln eines Input-Datenwortes unter Verwendung eines Schlüssels, um ein Output-Datenwort zu erhalten,

- Anwenden von reversiblen Einzelbit-Operationen auf das Input-Datenwort vor dem Ver- bzw. Entschlüsseln und/oder Anwenden von Einzelbit-Operationen auf das durch das Ver- bzw. Entschlüsseln erhaltene Output-Datenwort, wobei die Einzelbit-Operationen durch eine vollständig minimierte Boole'sche Operation repräsentiert sind.

Fig. 2b

EP 1 833 191 A1

**Beschreibung**

Die Erfindung betrifft ein Datenverarbeitungsverfahren, das einen Verschlüsselungsalgorithmus beinhaltet.

Die Ver- und Entschlüsselung von digitalen Daten gewinnt beispielsweise bei der Übertragung von digitalen Audio- und Bilddaten über öffentliche Netze an Bedeutung. Um einen ausreichenden Kopierschutz zu gewährleisten werden darüber hinaus auch Audio- und Bilddaten verschlüsselt auf Datenträgern (CD, DVD, etc.) gespeichert. Die Verschlüsselung und vor allem die Entschlüsselung der Daten erfolgt normalerweise durch eine eigens dafür entwickelte Schaltung, die beispielsweise in einem ASIC implementiert sein kann. Durch technische Weiterentwicklung wird es jedoch zunehmend möglich eine solche Ver- und Entschlüsselung auch in einem handelsüblichen PC in Echtzeit zu realisieren, wodurch auch die Gefahr für einen Missbrauch steigt.

Um die Ver- oder Entschlüsselung der Daten auf einem PC zu verhindern, ist es bekannt, die Verschlüsselungsalgorithmen komplexer zu gestalten, um deren Verarbeitungszeit durch die CPU eines PCs derart zu erhöhen, dass die Daten nicht mehr in Echtzeit verarbeitet werden können. Aus praktischer Sicht wäre es jedoch wünschenswert, herkömmliche Verschlüsselungsalgorithmen unverändert verwenden zu können.

Der vorliegenden Erfindung liegt die Aufgabe zugrunde, ein Datenverarbeitungsverfahren, welches ein Ver- oder Entschlüsselungsverfahren beinhaltet, zur Verfügung zu stellen, welches für eine missbräuchliche Implementierung auf einem PC unattraktiv ist, das mittels einer anwendungsspezifischen Schaltung (ASIC) jedoch einfach und schnell realisierbar ist.

Diese Aufgabe wird durch ein Verfahren nach Patentanspruch 1 gelöst. Vorteilhafte Ausführungen und Weiterentwicklungen sind Gegenstand der Unteransprüche.

Die vorliegende Erfindung wird nachfolgend anhand von in Figuren dargestellten Ausführungsbeispielen näher erläutert.

Figur 1a    zeigt beispielhaft die Verwendung von Einzelbit-Operationen bei einem erfindungsgemäßen Verfahren.

Figur 1b    zeigt beispielhaft die Verwendung von Einzelbit-Operationen wie Figur 1a, jedoch unter Verwendung eines zusätzlichen Schlüsselwortes

Figur 2a    zeigt die Einbindung der Einzelbit-Operationen in eine Feistel-Struktur, mit deren Hilfe die Einzelbit-Operationen wieder umgekehrt werden können.

Figur 2b    zeigt die empfängerseitige Datenverarbeitungskette mit der in einer Feistel-Struktur eingebundenen Entschleunigungslogik und dem Entschlüsselungsalgorithmus.

Figur 2c    zeigt die senderseitige Datenverarbeitungskette mit Verschlüsselungsalgorithmus und der in einer Feistel-Struktur eingebundenen Entschleunigungslogik.

Figur 2d    zeigt eine alternative senderseitige Datenverarbeitungskette, bei der der Verschlüsselungsalgorithmus parallel zu den Einzelbit-Operationen ausgeführt wird.

Figur 3a    zeigt eine Ausführungsform des erfindungsgemäßen Verfahrens in seiner Gesamtheit mit senderseitiger Verschlüsselung und empfängerseitiger Entschlüsselung, wobei vor und nach jedem Ver- bzw. Entschlüsselungsvorgang eine Entschleunigungslogik vorgesehen ist

Figur 3b    zeigt eine Ausführungsform des erfindungsgemäßen Verfahrens in seiner Gesamtheit mit senderseitiger Verschlüsselung und empfängerseitiger Entschlüsselung, wobei nach der Verschlüsselung und vor der Entschlüsselung eine Entschleunigungslogik vorgesehen ist.

Figur 3c    zeigt eine Ausführungsform des erfindungsgemäßen Verfahrens in seiner Gesamtheit mit senderseitiger Verschlüsselung und empfängerseitiger Entschlüsselung, wobei vor der Verschlüsselung und nach der Entschlüsselung eine Entschleunigungslogik vorgesehen ist.

In den Figuren bezeichnen, sofern nicht anders angegeben, gleiche Bezugszeichen gleiche Teile mit gleicher Bedeutung.

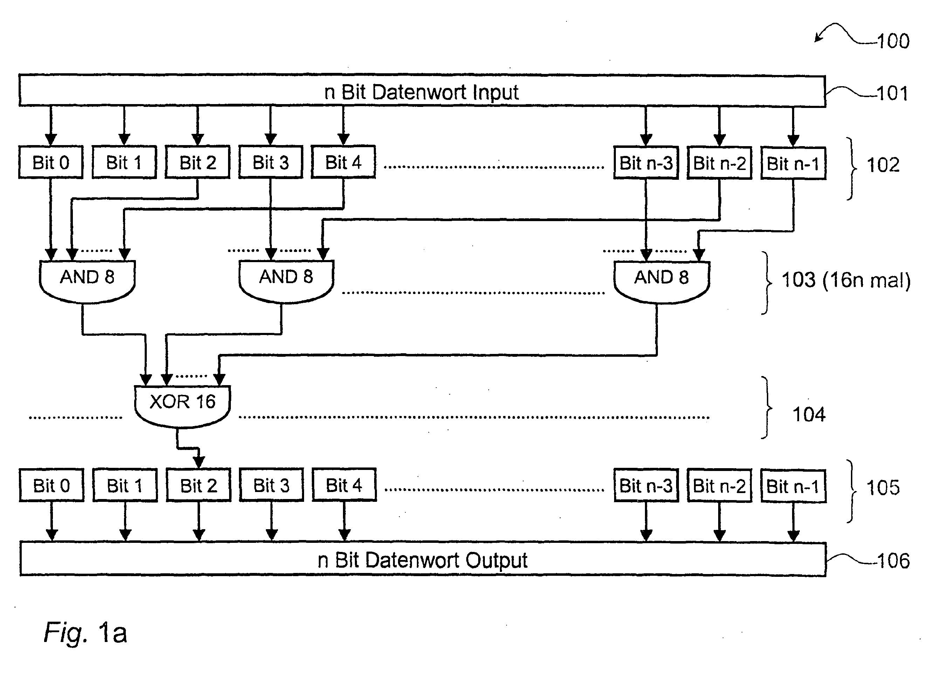

Figur 1a zeigt exemplarisch eine mögliche Struktur einer Logikschaltung 100, die bei dem erfindungsgemäßen Verfahren dazu dient, Einzelbit-Operationen auf ein Datenwort 101 vor und/oder nach einer Ver- oder Entschlüsselung anzuwenden. Solche Einzelbit-Operationen sind auf der CPU eines PCs nur sehr langsam durchzuführen, während sie in einer anwendungsspezifischen Schaltung rasch und effektiv durchgeführt werden können. Die Logikschaltung 100 dient somit einer "Entschleunigung" der Datenverarbeitung, wobei diese Entschleunigung für eine Datenverarbeitung in der CPU eines PCs besonders wirksam ist, so dass eine Datenverarbeitung in Echtzeit deutlich erschwert ist.

Bei dem in Figur 1a dargestellten Beispiel werden einzelne Bits 102 des Datenwortes 101 mittels AND-Operatoren 103 und XOR-Operatoren 104 verknüpft. Im vorliegenden Beispiel werden je acht einzelne Bits 102 des n Bit breiten Input-Datenwortes 101 mit einem 8-Input-AND-Operator 103 verknüpft. Insgesamt werden 16 x n verschiedene Kombinationen von Bits 102 mit 16 x n 8-Input-AND-Operatoren 103 verknüpft. Jeweils 16 dieser Verknüpfungsergebnisse werden dann mit einem 16-Input-XOR-Operator 104 verknüpft. Dazu sind n derartige 16-Input-XOR-Operatoren 104 notwendig. Die Ergebnisse dieser n XOR-Verknüpfungen stellen die einzelnen Bits 105 eines Output-Datenwortes 106 dar, das nach Durchführung der Einzelbit-Operationen aus dem Input-Datenwort 101 hervorgeht.

Das zuvor erläuterte Verfahren eignet sich in noch zu erläuternder Weise insbesondere dazu, in einer Daten-Entschlüsselungseinheit, der verschlüsselte Daten zur Entschlüsselung zugeführt werden, auf verschlüsselte Datenwörter vor der Entschlüsselung und/oder auf entschlüsselte Datenwörter nach der Entschlüsselung angewendet zu werden. In einer Verschlüsselungs-Einheit, die das verschlüsselte Datenwort bereitstellt, ist hierbei eine zu der durch die Entschleunigungs-Logik durchgeführte inverse Operation durchzuführen.

Die Einzelbit-Operationen lassen sich in Form von Boole'schen Operationen darstellen, die das Input-Datenwort 101 der Entschleunigungs-Logik 100 auf das Output-Datenwort 106 abbilden. Um das Ziel der Entschleunigung optimal zu erreichen muss die Boole'sche Funktion, welche die Einzelbit-Operationen repräsentiert, minimal sein. Die die Einzelbit-Operationen 100 repräsentierende Boole'sche Funktion darf also durch Minimierungsverfahren, wie beispielsweise das von Quine/McCluskey oder das von Karnaugh/Veitch nicht weiter minimierbar sein, d.h. die Anzahl der zur Abbildung des Input-Datenwortes 101 auf das Output-Datenwort erforderlichen Operationen darf sich nicht verringern lassen. Dies ist gleichbedeutend damit, dass sich die Anzahl der in der Entschleunigungs-Logik 100 vorhandenen Logikgatter nicht mehr weiter reduzieren lässt.

Es sei darauf hingewiesen, dass beliebige Kombinationen logischer Verknüpfungen anwendbar sind, um aus dem Input-Datenwort 101 das Output-Datenwort 106 zu erzeugen. Außer den oben beispielhaft erläuterten AND- und XOR-Verknüpfungen eignen sich insbesondere NAND- und NOR-Verknüpfungen (nicht dargestellt).

Des weiteren darf die Boole'sche Funktion keine höherwertigen Funktionen wie beispielsweise Addition, Multiplikation, etc. repräsentieren, da Standard-CPUs auf solche optimiert sind und dann das Ziel der Entschleunigung nicht erreicht würde.

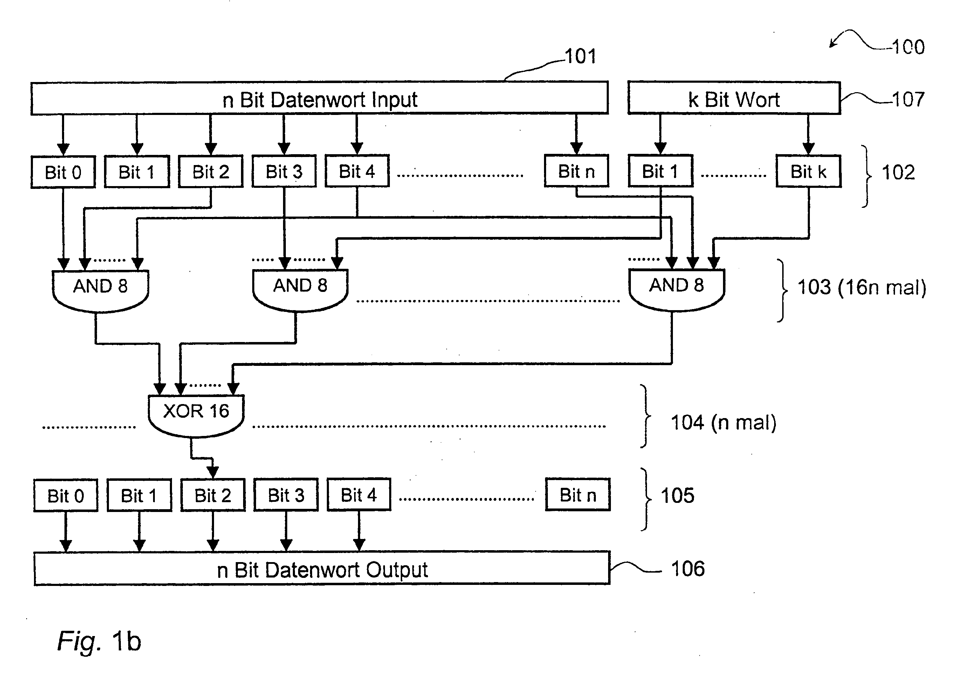

Das in Figur 1b gezeigte Beispiel verwendet zusätzlich zu dem n Bit breiten Input-Datenwort 101 zusätzlich ein k Bit breites Schlüsselwort 107 zur Abbildung des Input-Datenworts 101 auf das Output-Datenwort 106. Die Bits des Schlüsselwortes 107 werden hierbei wie Bits des Input-Datenwortes behandelt, wobei aus den n+k der Logik 100 zugeführten Bits n Bits am Ausgang erzeugt werden. In dem dargestellten Beispiel werden In gleicher Weise wie in dem in Figur 1a gezeigten Beispiel werden insgesamt 16 x n Kombinationen aus insgesamt (n+k) einzelnen Bits der beiden Datenworte 100 und 107 mittels 16 x n 8-Input-AND-Operatoren 103 verknüpft. Die 16 x n Verknüpfungsergebnisse werden wieder mit n 16-Input-XOR-Operatoren 104 verknüpft, um so schließlich die n einzelnen Bits 105 des Output-Datenwortes zu erhalten.

Die in den Figuren 1a und 1b dargestellte Logik 100 ist im Allgemeinen nicht umkehrbar, das heißt aus dem Output-Datenwort 106, welches aus dem Input-Datenwort 101 mit Hilfe der Einzelbit-Operationen 103, 104 erzeugt wurde, kann das Input-Datenwort 101 nicht mehr zurückgewonnen werden. Dieser Vorgang ist also nicht reversibel. Die Reversibilität ist jedoch eine Voraussetzung, um die Entschleunigungs-Logik in einer Entschlüsselungseinheit ohne Verlust der Daten anwenden zu können.

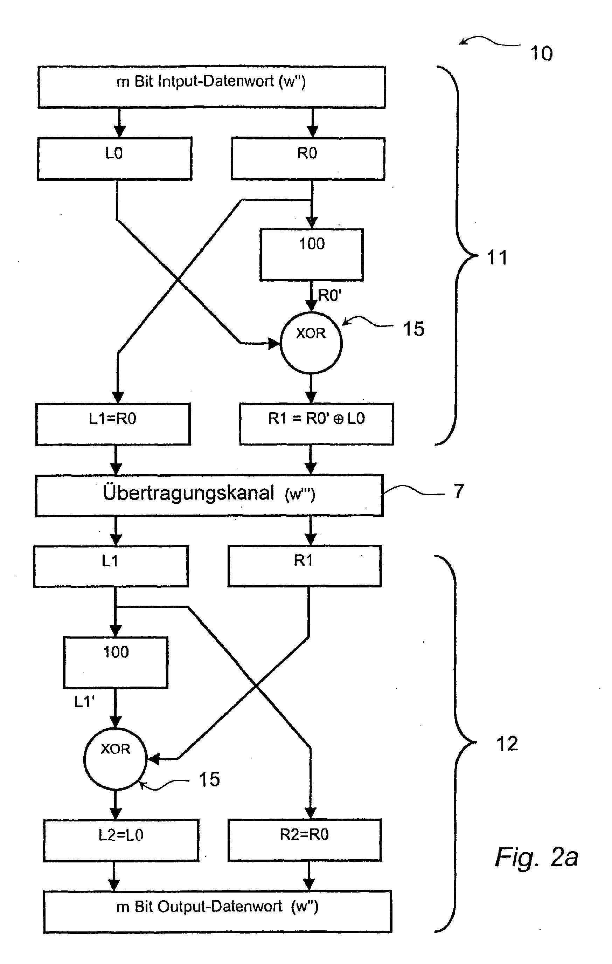

Eine Reversibilität der durch die Entschleunigungs-Logik 100 durchgeführten Operationen kann dadurch erreicht werden, dass die Entschleunigungs-Logik in eine Feistel-Struktur 11, 12 eingebettet wird, was nachfolgend anhand von Figur 2a dargestellt ist. Eine von einer ersten Feistel-Struktur 11 bewirkte Operation ist hierbei immer durch eine zu der ersten Feistel-Struktur 11 komplementäre zweite Feistel-Struktur 12 umkehrbar, obwohl die erste Struktur 11 die durch die Logik 100 durchgeführte nicht reversible Operation 100 enthält.

Die Kodierung eines m Bit breiten Datenwortes w" mit Hilfe der Feistel-Struktur 11 erfolgt dabei wie im Folgenden beschrieben:

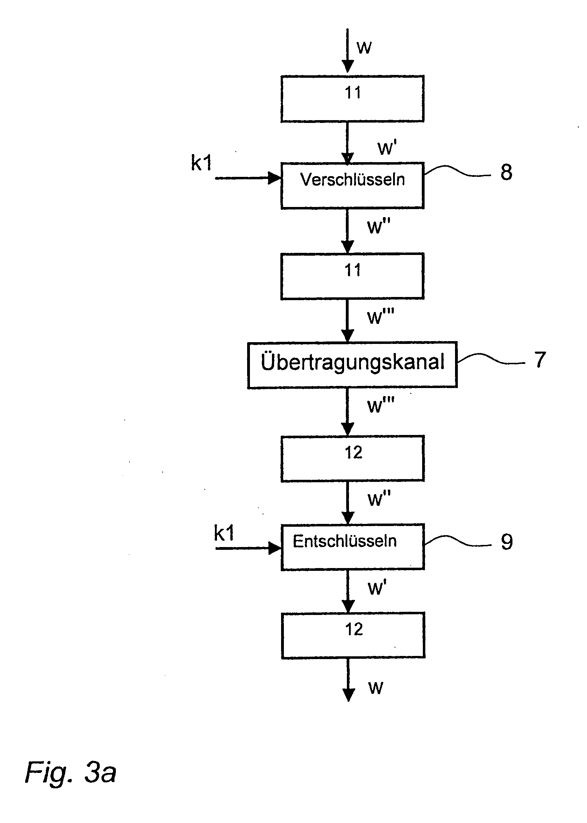

In einem ersten Schritt wird das m Bit breite Input-Datenwort w" von einer nicht näher dargestellten Quelle übernommen, z. B. als Ergebnis eines Verschlüsselungsalgorithmus 8, vgl. hierzu auch Figur 3a.

In einem weiteren Schritt wird das Input-Datenwort w'' in ein erstes Teil-Datenwort L0 und eine zweites Teil-Datenwort R0 unterteilt. Beide Teil-Datenworte haben in dem Beispiel die gleiche Wortbreite von n Bit.

In einem weiteren Schritt wird das zweite Teil-Datenwort R0 der Entschleunigungs-Logik zugeführt, die die anhand von Figur 1a und 1b erläuterten Einzelbit-Operationen 100 durchführt. Ergebnis der Einzelbit-Operationen ist ein n Bit breites, verändertes zweites Teil-Datenwort R0'

In einem nachfolgenden Schritt wird das erste Teil-Datenwort L0 unter Verwendung des veränderten Datenwortes R0' maskiert. Das erste Teil-Datenwort L0 wird hierzu bitweise mit dem veränderten zweiten Teil-Datenwort R0' XOR- verknüpft. Ergebnis dieser XOR-Verknüpfung ist ein maskierte Teil-Datenwort R1, für das gilt:

$$R1 = R0' \oplus L0 \qquad (1)$$

Das Symbol $\oplus$ steht hierbei für eine bitweise XOR-Verknüpfung.

Am Ausgang der Feistel-Struktur 11 steht ein Ausgangs-Datenwort zur Verfügung, das sich aus einem ersten Teil-Datenwort L1 und einem zweiten Teil-Datenwort R1 zusammensetzt, wobei das erste Teil-Datenwort L1 dem am Eingang zur Verfügung stehenden zweiten Teil-Datenwort R0 entspricht und das zweite Teil-Datenwort R1 am Ausgang dem maskierten Datenwort R1 entspricht.

Das so erhaltene Ausgangs-Datenwort w''' kann über einen Übertragungskanal übertragen werden. Alternativ besteht die Möglichkeit, die durch die Feistl-Struktur vorgenommene Kodierung mehrfach anzuwenden, indem das Ausgangs-Datenwort vor einer Übertragung wenigstens einmal an den Eingang der Feistel-Struktur zurückgekoppelt wird, um das Verfahren erneut zu durchlaufen was in Figur 2a durch gestrichelte Pfeile dargestellt ist.

Die durch die erste Feistel-Struktur 11 vorgenommene Kodierung des Input-Datenwortes w'' kann durch eine zu der ersten Feistel-Struktur 11 komplementäre zweite Feistel-Struktur 12 rückgängig gemacht werden, die sich von der ersten Struktur 11 dadurch unterscheidet, dass die für sich allein nicht reversiblen Einzelbit-Operationen 100 im jeweils anderen Zweig erfolgen. Auf das Teil-Datenwort L1 werden somit die Einzelbit-Operationen 100 angewendet, wodurch man ein verändertes Teil-Datenwort L1' erhält. Dieses Teil-Datenwort L1' wird mit dem empfangenen Teil-Datenwort R1 XOR-verknüpft und man erhält ein Teil-Datenwort L2, für das gilt:

$$L1' \oplus R1 \qquad (2)$$

Das Teil-Datenwort R2 ist gleich dem empfangenen Teil-Datenwort L1. Die beiden Teil-Datenworte L2 und R2 können wieder zu einem gesamten Output-Datenwort zusammengefasst werden, welches z. B. an einen Entschlüsselungsalgorithmus 9 weitergeleitet wird. Siehe dazu auch Figur 3a. Die Teil-Datenworte L2 und R2 entsprechen dabei genau den Teil-Datenworten R0 und L0. Die empfängerseitige komplementäre Feistel-Struktur 12 hat die Wirkung der senderseitigen Feistel-Struktur 11 genau egalisiert.

Wenn die senderseitige die Feistel-Struktur 11 t-mal für jedes Input-Datenwort durchlaufen wird, ist die empfängerseitige komplementäre Struktur 12 ebenfalls t-mal zu durchlaufen.

Die Umkehrbarkeit des durch die senderseitige Feistel-Struktur 11 auf das Input-Datenwort w'' angewendete Verfahren kann wie folgt gezeigt werden:

Das zweite Teil-Datenwort R0 wird unverändert an das andere Ende der Datenverarbeitungskette weitergegeben, es gilt also

$$R2 = L1 = R0 \qquad (3).$$

Für das erste Teil-Datenwort L2 gelten folgende Zusammenhänge, die man direkt durch sukzessives Einsetzen erhält:

$$
\begin{aligned}
L2 = R1 \oplus L1' &= \\
&= R1 \oplus R0' = \\
&= L0 \oplus R0' \oplus R0' = \\
&= L0 \oplus 0 = \\
&= L0 \qquad (4).
\end{aligned}
$$

Dabei ist zu berücksichtigen, dass eine XOR-Verknüpfung zweier identischer Ausdrücke immer Null ergibt (R0'

$\oplus$ R0' =0) und die XOR-Verknüpfung eines beliebigen Ausdruckes mit 0 den Ausdruck nicht verändert (L0 $\oplus$ 0 = L0) .

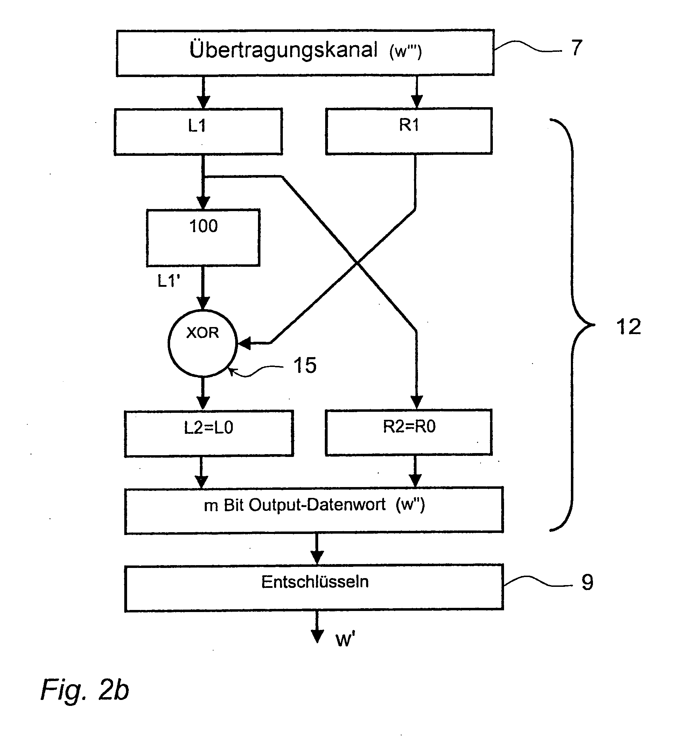

Das erfindungsgemäße Verfahren macht sich die durch Einbetten in eine Feistel-Struktur gewonnene Reversibilität der Einzelbit-Operationen zu Nutze. Figur 2b zeigt ein Ausführungsbeispiel eines erfindungsgemäßen Verfahrens, bei dem Einzelbit-Operationen durch eine in eine Feistel-Struktur 12 eingebettete Entschleunigungs-Logik 100 in einer Empfängereinheit vor einer Entschlüsselung 9 verschlüsselt übertragener Daten erfolgt. Ein über einen Übertragungskanal 7 empfangenes Datenwort w''' wird hierbei zuerst durch die Feistel-Struktur 12 modifiziert. Das daraus resultierende geänderte Datenwort w'' wird dem Entschlüsselungsalgorithmus 9 zugeführt, welcher als Resultat das entschlüsselte Datenwort w' liefert.

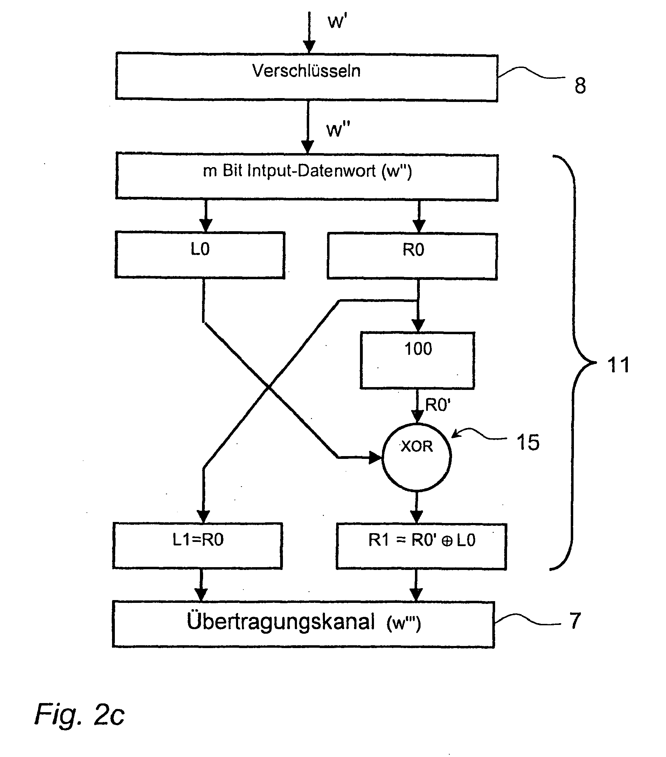

Figur 2c veranschaulicht das zu dem in Figur 2b dargestellten Verfahren komplementäre Verfahren, das senderseitig eingesetzt werden kann. Ein unverschlüsseltes Datenwort w' wird hierbei zunächst zu einem verschlüsselten Datenwort w'' verschlüsselt. Dieses verschlüsselte Datenwort w'' wird anschließend der Feistel-Struktur 11 zugeführt und durch die darin enthaltenen Einzelbit-Operationen 100 zu einem Datenwort w''' verändert. Dieses geänderte Datenwort w''' wird dann in einem Übertragungskanal 7 übertragen.

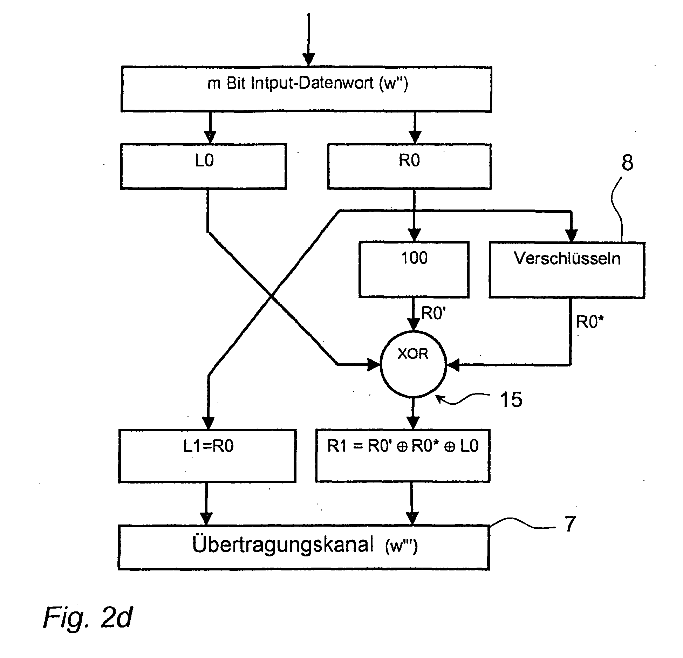

In Figur 2d ist eine besondere Variante der oben beschriebenen Ausführungsbeispiele dargestellt. Die Verschlüsselung 108 findet hierbei nicht vor oder nach den in den Figuren 2a bis 2c dargestellten Feistel-Strukturen 11 und 12 statt, sondern innerhalb der Struktur, parallel zu den Einzelbit-Operationen 100. Das Ergebnis der Verschlüsselung R0* wird dann zusätzlich zu dem Ergebnis R0' der Einzelbit-Operationen 100 mit dem Teil-Datenwort L0 XOR-verknüpft. Bei einer Entschlüsselung ist ein analoges Vorgehen möglich.

Wie in den bereits beschriebenen Beispielen wird ein zunächst unverschlüsseltes Datenwort w'' in ein erstes Teil-Datenwort L0 und ein zweites Teil-Datenwort R0 geteilt. Auf das zweite Teil-Datenwort R0 werden einerseits die in den Figuren 1a oder 1b gezeigten Einzelbit-Operationen angewandt, welche als Ergebnis das veränderte Teil-Datenwort R0' liefern, und andererseits ein Verschlüsselungsalgorithmus, der als Ergebnis das verschlüsselte Teil-Datenwort R0* liefert, angewandt. In einem weiteren Schritt werden das veränderte Teil-Datenwort R0' und das verschlüsselte Teil-Datenwort R0* mit dem ersten Teil-Datenwort L0 XOR-verknüpft. Das Ergebnis dieser XOR-Verknüpfung ist das Teil-Datenwort R1 (R1 = R0' $\oplus$ R0* $\oplus$ L0). Das Teil-Datenwort L1, welches gleich dem Teil-Datenwort R0 ist, und das Teil-Datenwort R1, bilden zusammen das Output-Datenwort w''', welches über einen Übertragungskanal 7 zu einem Empfänger übertragen wird. Alternativ kann vor der Übertragung die in Figur 2d beschriebene Struktur auch mehrmals nacheinander durchlaufen werden.

Figur 3a zeigt das erfindungsgemäße entschleunigte Datenverarbeitungsverfahren als gesamtes Verfahren inklusive der senderseitigen Verschlüsselung 8 und der empfängerseitigen Entschlüsselung 9. Senderseitig wird in einem ersten Schritt ein Datenwort w, welches z. B. Bestandteil eines Videostreams sein kann, mit der in Figur 2a dargestellten Feistel-Struktur 11 verändert. Das Ergebnis ist ein verändertes Datenwort w'. Dieses wird wiederum einem Verschlüsselungsalgorithmus zugeführt, welcher mit Hilfe eines k Bit breiten Schlüssels k1 das Datenwort w' zu einem verschlüsselten Datenwort w'' verschlüsselt. Um eine weitere Entschleunigung zu erreichen, bzw. um empfängerseitig einen mehrfachen Durchlauf einer komplementären Feistel-Struktur 12 erforderlich zu machen, kann dieses verschlüsselte Datenwort w'' noch einmal durch die Feistel-Struktur 12 zu einem Datenwort w''' verändert werden. Grundsätzlich würde jedoch eine Feistel-Struktur 11 auf der Senderseite und eine komplementäre Struktur 12 auf der Empfängerseite genügen.

Nach der Übertragung des Datenwortes w''' durch einen Übertragungskanal 7 wird das übertragene Datenwort w''' durch eine komplementäre Feistel-Struktur 12 verändert und man erhält wieder das verschlüsselte Datenwort w'' zurück. Dieses wird wiederum von einem entsprechenden Entschlüsselungsalgorithmus 9 mit Hilfe des Schlüssels k1 entschlüsselt und man erhält als Ergebnis wieder das ursprüngliche veränderte Datenwort w'. Um endgültig wieder das "originale" Datenwort w zu erhalten muss die senderseitig durch die Struktur 11 bewirkte Veränderung wieder durch eine weitere komplementäre Feistel-Struktur 12 invertiert werden. Das damit erhaltene Datenwort w kann dann einem geeigneten Wiedergabegerät zugeführt werden.

Zusammenfassend lässt sich das Verfahren entsprechend Figur 3a wie folgt darstellen:

- Bereitstellen eines Input-Datenwortes w,

- Verändern des Input-Datenwortes w durch ein- oder mehrfaches Durchlaufen einer Feistel-Struktur 11 (vgl. Figur 2a) mit einem Block Einzelbitoperationen 100, um ein Verändertes Datenwort w' zu erhalten,

- Verschlüsseln des veränderten Datenwortes w' unter Verwendung eines Schlüssels k1, um ein verschlüsseltes Datenwort w'' zu erhalten,

- Nochmaliges Verändern des verschlüsselten Datenwortes w'' durch ein- oder mehrfaches Durchlaufen einer Feistel-Struktur 11 mit einem Block Einzelbitoperationen 100, um ein Datenwort w''' zu erhalten, und

- Übertragen des Datenwortes w''' über einen Übertragungskanal 7.

Empfängerseitig wiederholt sich der Vorgang unter Verwendung eines Entschlüsselungsalgorithmus 9 statt des Verschlüsselungsalgorithmus 8 und unter Verwendung komplementärer Feistel-Strukturen 12 statt den Strukturen 11.

Werden in den senderseitig vorhandenen Logikstrukturen 11 Schlüssel einbezogen, wie dies anhand von Figur 1b erläutert wurde, so sind in den Entschleunigung dienenden empfängerseitigen Strukturen die gleichen Schlüssel einzubeziehen. Werden senderseitig unterschiedliche Schlüssel k1, k2 in den vor und nach der Verschlüsselung durchlaufenen Algorithmen verwendet, so sind empfängerseitig diese Schlüssel in umgekehrter Reihenfolge einzusetzen, wie dies gestrichelt dargestellt ist.

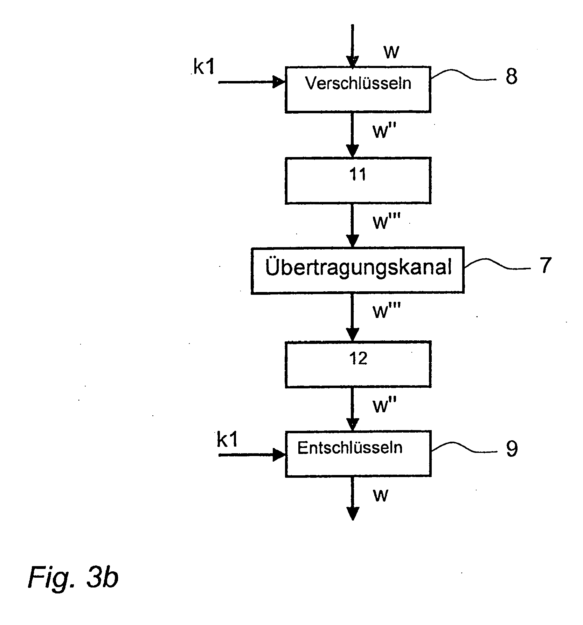

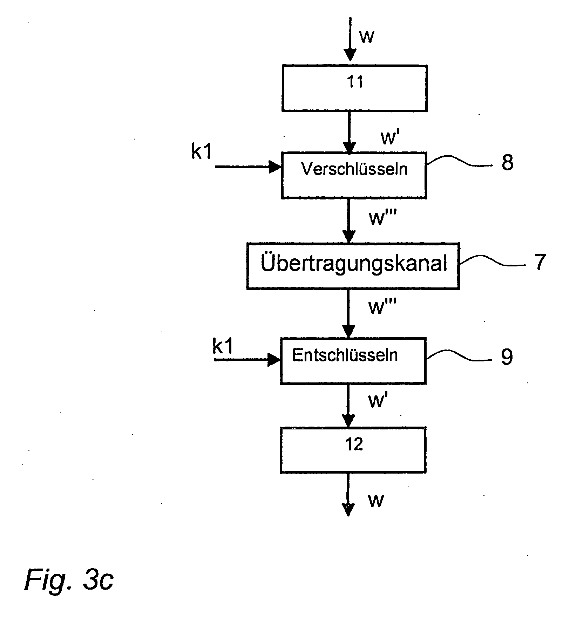

Die Figuren 3b und 3c zeigen eine vereinfachte Variante des in Figur 3a dargestellten Verfahrens. Dabei ist sender- und empfängerseitig jeweils nur eine Feistel-Struktur 11 bzw. 12 vorhanden. Wird die Entschleunigung senderseitig nach der Verschlüsselung 8 mit der Feistel-Struktur 11 durchgeführt, so ist empfängerseitig die Entschleunigung durch die Feistel-Struktur 12 vor der Entschlüsselung 9 vorzusehen. Dieser Fall ist in Figur 3b dargestellt.

Figur 3c zeigt den umgekehrten Fall. Dabei erfolgt senderseitig die Entschleunigung vor dem Verschlüsseln 8 mit Hilfe der Feistel-Struktur 11 und die Entschleunigung empfängerseitig nach dem Entschlüsseln 9 mit der Feistel-Struktur 12.

Bezugszeichenliste

| | |
|---|---|
| 7 | Übertragungskanal |
| 8 | Entschlüsselungsalgorithmus |
| 9 | Verschlüsselungsalgorithmus |
| 10 | reversible Feistel-Strukturen |
| 11 | senderseitige Feistel-Struktur |
| 12 | empfängerseitige Feistel-Struktur |
| 15 | XOR-Operator |
| 17 | XOR (exklusiv-oder) Operator |
| 20 | Algorithmus |
| 40 | m Bit Input-Datenwort |
| 41 | k Bit Input |
| 42 | m Bit Output-Datenwort |
| 100 | Einzelbit-Operationen (Entschleunigungs-Logik) |
| 101 | n Bit Input-Datenwort |
| 102 | einzelne Bits von 101 |
| 103 | AND-Operatoren |
| 104 | XOR-Operatoren |
| 105 | einzelne Bits von 106 |
| 106 | n Bit Ouput-Datenwort |
| 107 | k Bit Wort |
| t | Anzahl der Iterationen |
| w | (originales) Datenwort (m Bit) |
| w' | verändertes Datenwort (m Bit) |
| w'' | verschlüsseltes Datenwort (m Bit) |
| w''' | Datenwort (m Bit) |
| k1 | Schlüssel |
| L0 | erstes Teil-Datenwort (n Bit) |
| R0 | zweites Teil-Datenwort (n Bit) |
| R0' | verändertes Teil-Datenwort (n Bit) |
| L1 | erstes Teil-Datenwort (n Bit) |
| R1 | zweites Teil-Datenwort (n Bit) |
| L1' | verändertes Teil-Datenwort |

**Patentansprüche**

1.  Datenverarbeitungsverfahren, das ein Ver- oder Entschlüsselungsverfahren und folgende Verfahrensschritte umfasst:

    - Ver- oder Entschlüsseln eines Input-Datenwortes (w'; w'') unter Verwendung eines Schlüssels (k1), um ein Output-Datenwort (w''; w') zu erhalten,
    - Anwenden von reversiblen Einzelbit-Operationen (11; 12) auf das Input-Datenwort (w; w'; w''; w''') vor dem Ver- bzw. Entschlüsseln und/oder Anwenden von Einzelbit-Operationen (11; 12) auf das durch das Ver- bzw. Entschlüsseln erhaltene Output-Datenwort, wobei die Einzelbitz-Operationen durch eine vollständig minimierte Boole'sche Operation repräsentiert sind.

2.  Datenverarbeitungsverfahren nach Anspruch 1, bei dem das Anwenden der reversiblen Einzelbit-Operationen (11; 12) vor und nach dem Verschlüsseln oder vor und nach dem Entschlüsseln erfolgt.

3.  Reversibles Verfahren (11; 12) zur Verlangsamung einer Datenverarbeitungskette mit folgenden Schritten

    - Übernehmen eines Input-Datenwortes (w'') von einer Quelle,
    - Teilen des Input-Datenwortes in einen ersten Teil (L0) und einen zweiten Teil (R0), wobei beide Teile die selbe Wortbreite aufweisen,
    - Anwenden von Einzelbit-Operationen (100) auf das Teil-Datenwort (R0), um ein verändertes Teil-Datenwort (R0') zu erhalten, wobei die Einzelbit-Operationen durch eine vollständig minimierte Boole'sche Operation repräsentiert sind,
    - XOR-Verknüpfen des Datenwortes (L0) mit dem veränderten Teil-Datenwortes (R0'), um ein maskiertes Teil-Datenwort (R1 = L0 $\oplus$ R0') zu erhalten,
    - Zusammenführen des Teil-Datenwortes (L1 = R0) und des maskierten Datenwortes (R1) zu einem Output-Datenwort (w''')

4.  Verfahren nach Anspruch 3, bei dem das reversible Verfahren (11; 12) vor und/oder nach der Ver- und Entschlüsselung mehrfach hintereinander ausgeführt wird.

5.  Verfahren nach Anspruch 3 oder 4, mit folgenden zusätzlichen Schritten

    - Anwenden eines Ver- oder Entschlüsselungsalgorithmus' (8; 9) auf das Teil-Datenwort (R0), um ein verschlüsseltes Teil-Datenwort (R0*) zu erhalten,
    - XOR-Verknüpfen des verschlüsselten Teil-Datenwortes (R0*) mit dem Datenwort (L0) und dem veränderten Teil-Datenwortes (R0'), um ein maskiertes Teil-Datenwort (R1= L0 $\oplus$ R0' $\oplus$ R0*) zu erhalten.

6.  Datenverarbeitungsverfahren, das ein Ver- oder Entschlüsselungsverfahren und folgende Verfahrensschritte umfasst:

    - Ver- oder Entschlüsseln eines Input-Datenwortes (R0) unter Verwendung eines Schlüssels (k1), um ein erstes Output-Datenwort (R0*) zu erhalten,
    - Anwenden von reversiblen Einzelbit-Operationen (11; 12) auf das Input-Datenwort (R0), um ein zweites Output-Datenwort (R0') zu erhalten, wobei die Einzelbit-Operationen durch eine vollständig minimierte Boole'sche Operation repräsentiert sind, und
    - XOR-Verknüpfen des durch die Verschlüsselung erhaltenen ersten Output-Datenworts (R0*) und des durch die Einzelbit-Operationen erhaltenen zweiten Output-Datenworts (RO').

100

101

102

103 (16n mal)

104

105

106

n Bit Datenwort Input

Bit n-1
Bit n-2
Bit n-3
Bit 4
Bit 3
Bit 2
Bit 1
Bit 0

AND 8
AND 8
AND 8

XOR 16

n Bit Datenwort Output

Bit n-1
Bit n-2
Bit n-3
Bit 4
Bit 3
Bit 2
Bit 1
Bit 0

*Fig. 1a*

*Fig.* 1b

*Fig. 2a*

Fig. 2b

w'

| Verschlüsseln | 8

w''

| m Bit Intput-Datenwort (w'') |

| L0 | | R0 |

| 100 |

R0'

XOR ← 15

11

| L1=R0 | | R1 = R0' ⊕ L0 |

| Übertragungskanal (w'''') | 7

*Fig. 2c*

m Bit Intput-Datenwort (w'')

L0

R0

8

100

Verschlüsseln

R0'

R0*

XOR

15

L1=R0

$R1 = R0' \oplus R0^* \oplus L0$

7

Übertragungskanal (w''')

*Fig. 2d*

w

11

w'

k1 ⟶ Verschlüsseln ⟍ 8

w''

11

w'''

Übertragungskanal ⟍ 7

w'''

12

w''

k1 ⟶ Entschlüsseln ⟍ 9

w'

12

w

*Fig. 3a*

Fig. 3b

w

| 11 |

w'

k1 → | Verschlüsseln | ～ 8

w'''

| Übertragungskanal | ～ 7

w'''

k1 → | Entschlüsseln | ～ 9

w'

| 12 |

w

*Fig. 3c*

**Europäisches Patentamt**

# EUROPÄISCHER RECHERCHENBERICHT

**Nummer der Anmeldung**

EP 07 00 3459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 575 209 A (HARRIS CORP [US]) 14. September 2005 (2005-09-14) * Zusammenfassung * * Absatz [0001] - Absatz [0013] * * Absatz [0025] * * Absatz [0029] - Absatz [0031] * ----- | 1-6 | INV. H04L9/06 |
| X | US 6 320 964 B1 (CALLUM ROY [US]) 20. November 2001 (2001-11-20) * das ganze Dokument * ----- | 1-6 | |
| P,X | WO 2006/033013 A (SYNAPTIC LAB LTD [CH]; O'NEIL SEAN [AU]) 30. März 2006 (2006-03-30) * Zusammenfassung * * Seite 1, Zeile 5 - Zeile 8 * * Seite 10, Zeile 30 - Seite 13, Zeile 12 * ----- | 1-6 | |

|  |  |
|---|---|
|  | **RECHERCHIERTE SACHGEBIETE (IPC)** |
|  | H04L G06F |

Der vorliegende Recherchenbericht wurde für alle Patentansprüche erstellt

| Recherchenort | Abschlußdatum der Recherche | Prüfer |
|---|---|---|
| Den Haag | 28. Juni 2007 | Liebhardt, Ingo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 00 3459

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2007

| Im Recherchenbericht angeführtes Patentdokument | Datum der Veröffentlichung | Mitglied(er) der Patentfamilie | Datum der Veröffentlichung |
|---|---|---|---|
| EP 1575209 A | 14-09-2005 | KEINE | |
| US 6320964 B1 | 20-11-2001 | US 2002027988 A1 | 07-03-2002 |
| WO 2006033013 A | 30-03-2006 | KEINE | |

Für nähere Einzelheiten zu diesem Anhang : siehe Amtsblatt des Europäischen Patentamts, Nr.12/82

EPO FORM P0461